# EUROPEAN PATENT SPECIFICATION

(11) **EP 0 812 806 B1**
(45) Date of publication and mention of the grant of the patent: **26.03.2003**
(21) Application number: 97201730.5
(22) Date of filing: 07.06.1997
(51) Int. Cl.: C02F 3/04

(54) **Method and device for purifying polluted water**
Verfahren und Vorrichtung zur Reinigung von Abwasser
Procédé et dispositif pour l'épuration des eaux usées

(30) Priority: 11.06.1996 BE 9600528
(43) Date of publication of application: 17.12.1997
(73) Proprietor: Biotim, naamloze vennootschap., 1190 Brussel (BE)
(72) Inventor: Simoens, F., 1140 Brussel (BE); Pereira, J. R., 1130 Brussel (BE); Verstraete, W, 9032 Wondelgem (BE)
(74) Representative: Donné, Eddy

(56) References cited:
- GB-A- 2 276 617
- US-A- 4 076 616
- US-A- 4 444 664
- US-A- 5 037 550
- "Lehr- und Handbuch der Abwassertechnik" 1985 , ERNST&SOHN , BERLIN-DE XP002040703 3rd edition, vol. IV; * page 95; figures 2.5-4 * * page 97, paragraph 2 * * page 130; figures 2.5-18G * * page 138, last paragraph - page 139, paragraph 4; figures 2.5-22 *

## Description

The present invention concerns a method for purifying polluted water, in particular for removing organic-components thereof which cannot be easily biodegraded.

In particular, the invention concerns a method of the type whereby the polluted water is led through an adsorption bed of active carbon, upon which adheres an aerobic biomass.

Such active carbon beds or carbon columns are especially used following a biological purification, possibly after a quick-run filtering in a single or multilayer filter, whereby suspended matter is removed and the BOD value is further reduced.

Active carbon better adsorbs large organic molecules, many of which cannot be easily biodegraded anyway, than small soluble molecules which can be easily removed by means of for example an oxygen activated sludge process. Thus, active carbon can reduce colorants, aromatic substances and flavouring substances in the polluted water as well as residual organic micro pollutants such as pesticides to the required value.

After a certain length of time, the carbon granules become saturated and they can no longer adsorb the pollutants.

The active carbon granules then need to be replaced by new ones. The saturated carbon granules can be regenerated, which is usually done thermally in a shelf kiln.

The fact that the bed of active carbon granules has to be regularly replaced and regenerated is time-consuming and expensive. That is why said purification with active carbon is not practically applicable to waste water whereby the carbon granules would be saturated very quickly with organic pollutants.

In order to further improve the action of the active carbon filter, the water to be purified is sometimes subjected to ozonization first.

Ozone has a highly oxidizing action in relation to organic matter and substances which are hard to degrade, such as some micropollutants, which are oxidized. Thanks to this preparatory oxidation, these substances which are hard to degrade become biodegradable. A biomass is created in the active carbon bed, and apart from the adsorption of the non-oxidized larger molecules, also a certain biodegradation of the oxidized molecules which have become biodegradable takes place in the carbon bed. This biological action is restricted, however, due to the low concentration of oxygen in the carbon bed.

In order to remove large amounts of organic matter by means of chemical oxidation, also large amounts of ozone are required, which is expensive. That is why small amounts of ozone are added in practice.

"LEHR- UND HANDBUCH DER ABWASSERTECHNIK", 3rd edition, vol. IV, 1985, Ernst & Sohn, Berlin, Den, pages 95,97,102,130 and 138-139, describe a method for purifying polluted water wherein the water is led through a bed of porous stone or similar granules covered with a biofilm of aerobic micro-organisms. Water is sprinkled on top of the bed, and purified water is collected underneath a grid which supports the bed and evacuated. Air is forced through the bed by means of fans.

US-A-4.076.616 discloses a method in which polluted water percolates through a submerged bed of activated carbon. Oxygenation air is blown in the bed at an intermediate level. The portion of the bed situated above the intermediate level, where colonies of aerobic bacteria are present on the active carbon, does not take advantage of the absorbing activity of the activated carbon. The portion situated underneath this intermediate level is substantially free of active colonies of bacteria and functions in the manner of a bacterial depletion column and as a filter retaining bacterial colonies carried down.

GB-A-2.276.617 discloses a multi-functional biological reactor which can be used for aerobic treatment of polluted water. The reactor may be filled with a packing and, when used as aerobic reactor, oxygen-containing gas is added to the water before entering the reactor or the gas. Micro-organisms on the packing degrade the pollutants. The gas flows up as gas-bubbles in the reactor. An operation pressure above the atmospheric pressure is possible.

The invention aims a method of the above-mentioned type for the purification of polluted water which does not show the above-mentioned and other disadvantages.

In particular, the invention aims a method for removing organic matter from polluted water which is hard to remove or which is recalcitrant, whereby use is made of active carbon but whereby this active carbon has a much longer useful life than in the known methods with active carbon, and whereby, without ozonization, also organic matter which is hard to remove can be easily removed, such that the method is not only economically suitable for the purification of drinking water, but also for the treatment of waste water.

This aim is reached according to the invention in a method for purifying polluted water, in particular for removing organic matter thereof which cannot be easily biodegraded, whereby the polluted water is led through a bed, upon which an aerobic biomass adheres, whereby the flow of the polluted water is from top to bottom, and a flow of oxygen-containing gas is led through the bed, and whereby the bed is an adsorption bed of active carbon whereon organic malter is adsorbed and in that the polluted water is saturated with oxygen on the bed by means of the flow of oxygen-containing gas.

The organic pollutants which are adsorbed on the active carbon granules are degraded by the micro-organisms in a highly oxidative environment, which corresponds to a regeneration in-situ of the active carbon.

Biologically purifying polluted water by means of a biomass which adheres to a carrying material is also known as such. However, the carrying material is no adsorbing material such as active carbon, but for example sand.

Although up to 99% of the pollutants can be removed from the water with these purely biological methods, soluble microbiological exudates and residues consisting of organic components which are hard to degrade and which cannot be degraded by the available micro-organisms during the lingering period of the water, remain in the water.

That is why generally expensive extra treatments such as filtration (for example through membranes) or ozone treatments are required in order to meet the legal regulations regarding the discharge of waste water or the re-use of the water.

According to the invention, the polluted water and the oxygen-containing gas, for example air, are preferably led through the bed in the same direction of flow. Practically, this direction of flow is from top to bottom.

The present invention also concerns a device for purifying polluted water which is particularly suitable for the application of the above-mentioned method according to the invention.

Thus the present invention concerns a device for purifying polluted water, which contains a tank in which is provided a bed of active carbon granules upon which aerobic micro-organisms adhere which can degrade organic components, which tank is provided with a supply line for polluted water above the bed and with a discharge line for purified effluent underneath the bed and means to supply oxygen-containing gas to the bed, which device is characterized in that tank is a closed tank and that the means to supply oxygen-containing gas are means for entering said gas under pressure in the upper part of the tank.

In order to better explain the characteristics of the invention, the following preferred embodiment of a method and device for purifying water according to the invention is described as an example only without being limited in any way, with reference to the accompanying drawings, in which:
figure 1 schematically shows a device for the application of the method according to the invention;
figure 2 shows a section of a practical embodiment of the device in figure 1.

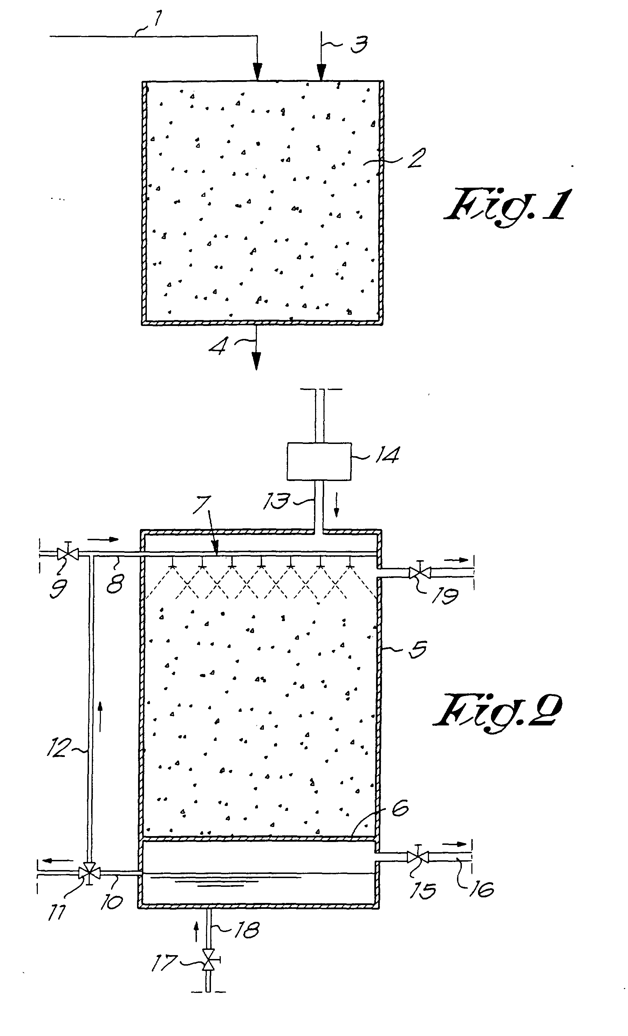

In order to purify polluted water 1 which contains organic components which cannot be easily biodegraded, this polluted water 1 to be purified, as is schematically represented in figure 1, is led over a bed 2 of active carbon granules which are colonized with aerobic micro-organisms, whereas an oxygen-containing gas 3 is supplied to this bed 2, such that the polluted water 1 is saturated with oxygen on the bed 2.

The polluted water 1 is supplied at the top of the bed 2, preferably sprinkled, at such a speed that no thick layer of polluted water is formed on the bed 2. A suitable speed is situated between 1.5 and 15 m/h.

This polluted water was preferably biologically pre-treated, such that it is merely polluted mainly with organic matter which can only be biologically degraded slowly or with great difficulty. Such organic matter contains for example organic nitrogen and carbon compounds which are toxic in relation to the conventional biological purifying systems.

The polluted water 1 to be treated preferably contains less than 50 mg/l solid particles in suspension.

The purified effluent 4 is collected at the bottom of the bed 2.

The bed 2 consists of granules of activated carbon with a large surface/volume proportion and a large porosity.

The thickness of the bed 2 is preferably situated between 1 and 3 m and is for example 2 m.

The aerobic micro-organisms which adhere to the active carbon granules of the bed 2 consist of a mixture of heterotrophic and autotrophic micro-organisms and possibly higher organisms such as protozoans and worms.

Naturally, nutrients for the micro-organisms can be added to the polluted water 1, for example in the shape of mineral salts such as phosphor-containing salts.

When the method is started up, an enriched culture of the heterotrophic and autotrophic bacteria, for example coming from an active sludge reactor, is preferably added to the bed 2.

The oxygen-containing gas 3 may consist of air or gases derived from a preceding biological treatment.

This gas 3 is injected at the top of the bed 2, preferably at a speed between 1.5 and 15 m/h, for example about 10 m/h. Thus, said gas 3 flows through the bed 2 in the same direction as the polluted water 1 to be purified. The excess of gas 3 flows out of the bottom of the bed 2. The oxygen-containing gas 3 can also be introduced at the bottom of the carbon bed 2, whereby it is led through the bed 2 at counterflow in relation to the polluted water 1.

Under these circumstances, a thin layer of polluted water is formed on the carbon granules which is saturated or supersaturated with oxygen and which forms a growth bottom for all sorts of active biomass.

The purification can be positively influenced by creating a light excess pressure in the bed 2, for example of 0.05 to 1 bar.

If the lingering period of the polluted water 1 in the bed 2 is not sufficiently long, the effluent 4 can be carried a second time through the bed 2, as a whole or partly, possibly together with fresh polluted water to be treated.

Due to the presence of solid particles in suspension in the polluted water 1 and the biomass growing on the bed 2, the bed 2 has to be washed from time to time in order to prevent obstructions.

This washing takes place by making pre-filtered water, for example a part of the effluent 4, flow at counterflow, i.e. from bottom to top, at a relatively high speed of 15 to 40 m/h, for example at about 20 m/h, through the bed 2 for 10 to 30 minutes, for example 15 minutes. It is possible, and in some cases advisable, to carry out a counterflow washing with air for 10 minutes.

The temperature in the bed 2 is maintained at between 4 and 40°C, preferably above 22°C, and the pH value between 5 and 10.

The adsorption and mechanical filtration through the active carbon bed 2 is completed with a catalytic and biological, bacterial action which is stimulated by the continuous supply of oxygen.

The marked biological activity in the bed 2 has for a result that the bed 2 is regenerated in-situ, such that the active carbon does not need to be regenerated or at least can be used relatively long before it needs to be regenerated, so that the method is economical.

Thanks to the oxygen-rich conditions around and especially inside the carbon granules and the extensive contact with the biomass, the matter which is not easily biodegraded will be degraded nonetheless, possibly after adsorption on the active carbon. The conditions in the bed 2 are also advantageous to the microbiological hydrolysis of reduced nitrogen compounds which are hard to degrade biologically and they promote the growth of autotrophous nitrificating biomass.

Micropollutants which are normally present in concentrations which are not sufficiently high to maintain the microbiological activity can now be degraded after the preceding adsorption. Compounds which are strongly hydrophillic and which are normally not or not entirely removed through adsorption on an active carbon bed, will now be degraded thanks to the biological activity.

Figure 2 shows a device which is particularly suitable for the application of the above-described method.

This device contains a standing, closed tank 5 in which, on a perforated bottom 6, is provided a bed 2 of active carbon granules.

Above this bed 2 is erected a sprinkling device 7, upon which the supply line 8 for the polluted water 1 is connected which can be shut off by means of a valve 9.

At the bottom, under the perforated bottom 6, a discharge line 10 for the effluent 4 is connected to the tank 5.

A three-way cock 11 in the discharge line 10 is connected to the line 8 via a recycling line 12.

At the top, an air supply line 13 in which is erected a compressor 14 opens into the tank 5. The air supply line 13, together with the compressor 14, forms means to supply oxygen-containing gas 3, in particular air, to the bed 2.

At the bottom, right under the perforated bottom 6 and above the connection of the discharge line 10 is connected a discharge line 16 for the excessive air which can be shut off with a valve 15.

According to a variant, the compressor 14 can be replaced by an exhaust fan in the discharge line 16.

At the bottom, a supply line 18 for washing water which can be shut off by a valve 17 opens into the bottom of the tank 5, whereas at the top, above the bed 2, the tank 5 is provided with a discharge line 19 which can be shut off.

The working of this device will be illustrated by means of two practical examples.

### Example 1.

During the purification, the valves 17 and 19 were closed. The shut-off valve 9 and the valve 15 were open and the three-way cock 11 was in the position in which the discharge line 10 was partly open but also connected to the recycling line 12.

Via the supply line 8, 1 m³/h of water to be treated, coming from an aerobic waste water treatment installation of a pharmaceutic company and with an average chemical oxygen consumption (COC) of 84 mg/l, an average Kjeldahl nitrogen concentration of 18 mg/l and a pH of 7.3 was supplied, for example by means of a pump.

This water to be treated contained organic components which can be considered to be recalcitrant as far as biological degradation is concerned, toxic to nitrificating biomass and critically toxic to fish, as a Brachydanio rerio survival test showed.

Via the recycling line 12, an amount of recycled effluent 4 was added to this water, and the formed polluted water 1 was sprinkled on the active carbon bed 2 which had a volume of 4 m³ by the sprinkling device 7.

The amount of recycled effluent 4 was set such by the three-way cock 11 that the polluted water 1 had a downward flow rate of 3 m/h.

By means of the compressor 14, air coming from a device for the removal of nutrients was injected via the line 13 at a speed of 10 m/h.

The pressure in the tank 5 amounted to 0.1 to 0.8 bar, and the temperature in the bed 2 amounted to over 22°C.

In the obtained effluent 4, the COC value had dropped to 22 mg/l and the Kjeldahl nitrogen concentration had dropped to 4 mg/l. The effluent 4 was entirely free of compounds which are toxic to fish, such as extractable organohalogens (EOX concentration dropped from 0.42 mg Cl/l to less than 0.01 mg Cl/l).

The ammonium nitrogen had been entirely nitrificated and transformed into nitrate nitrogen.

The nitrificating organisms Nitrosomonas and Nitrobacter, and the higher organism Dero furcatus were found to be present on the active carbon.

After 591 days of operation of the device, neither any regeneration, nor any replacement of the active carbon granules was required.

The air which was discharged via the line 16 was completely odourless.

When the bed 2 threatened to become obstructed due to the retained solid particles and excessive growth of the biomass, the compressor 14 was shut down and the valve 9 was shut off. The three-way cock 11 was put in the position in which the line 10 is closed, and the valve 15 was shut off.

The valves 17 and 19, however, were opened, and washing water was carried at a speed of 20 m/h through the bed 2 for 15 minutes.

The washing water was discharged via the opened discharge line 19 to a device for separating the biomass.

### Example 2.

The example 1 was repeated, but with water to be purified coming from a chemical company, with an average COC value of 865 mg/l and a Kjeldahl nitrogen concentration of 111 mg/l.

The effluent 4 only had a COC value of 67 mg/l and had a Kjeldahl nitrogen concentration of 38 mg/l. The ammonium nitrogen in the effluent 4 had dropped from 38 mg/l to 5 mg/l, which implies a removal of 87%.

The invention is by no means restricted to the above-described embodiments represented in the accompanying drawings; on the contrary, such a method and device for purifying water can be made in all sorts of variants while still remaining within the scope of the invention.

## Claims

1. Method for purifying polluted water, in particular for removing organic matter thereof which cannot be easily biodegraded, whereby the polluted water (1) is led through a bed (2), upon which an aerobic biomass adheres, whereby the flow of the polluted water is from top to bottom, and a flow of oxygen-containing gas is led through the bed (2), **characterized in that** the bed (2) is an adsorption bed of active carbon whereon organic matter is adsorbed and **in that** the polluted water (1) is saturated with oxygen on the bed by means of the flow of oxygen-containing gas.

2. Method according to claim 1, **characterized in that** the polluted water (1) and the oxygen-containing gas (3) are led through the bed (2) in the same direction of flow.

3. Method according to claim 1, **characterized in that** the direction of flow of the oxygen-containing gas (3) is from bottom to top.

4. Method according to any of the preceding claims, **characterized in that** the speed of the oxygen-containing gas (3) through the bed (2) is 1,5 to 15 m/h.

5. Method according to any of the preceding claims, **characterized in that** the speed of the polluted water (1) through the bed (2) is 1,5 to 15 m/h.

6. Method according to any of the preceding claims, **characterized in that** the bed (2) is situated in a closed tank (5) in which is created an excess pressure of between 0,05 and 1 bar.

7. Method according to any of the preceding claims, **characterized in that** a part of the effluent (4) is carried back and is added to water to be purified before being carried through the bed (2).

8. Device for purifying polluted water (1), which contains a tank (5) in which is provided a bed (2) of active carbon granules upon which aerobic micro-organisms adhere which can degrade organic components, which tank (5) is provided with a supply line (8) for polluted water (1) above the bed (2) and with a discharge line (10) for purified effluent (4) underneath the bed (2) and means (13-14) to supply oxygen-containing gas (3) to the bed (2), **characterized that** the tank (5) is a closed tank and that the means (13-14) to supply oxygen-containing gas are means for entering said gas under pressure in the upper part of the tank (5).

## Patentansprüche

1. Verfahren zum Reinigen von verschmutztem Wasser, insbesondere zum hieraus Entfernen von organischem Material, das nicht leicht biologisch abgebaut werden kann, wobei das Abwasser (1) durch ein Bett (2) geleitet wird, woran eine aerobe Biomasse haftet, wobei die Strömungsrichtung des verschmutzten Wassers von oben nach unten ist, und ein Strom sauerstoffhaltigen Gases durch das Bett (2) geleitet wird, **dadurch gekennzeichnet, dass** das Bett (2) ein Adsorptionsbett aus Aktivkohle ist, worauf organisches Material adsorbiert wird, und dass das verschmutzte Wasser (1) auf dem Bett mittels des Stroms sauerstoffhaltigen Gases mit Sauerstoff gesättigt wird.

2. Verfahren gemäß Anspruch 1, **dadurch gekennzeichnet, dass** das verschmutzte Wasser (1) und das sauerstoffhaltige Gas (3) in derselben Strömungsrichtung durch das Bett (2) geleitet werden.

3. Verfahren gemäß Anspruch 1, **dadurch gekennzeichnet, dass** die Strömungsrichtung des sauerstoffhaltigen Gases (3) von unten nach oben verläuft.

4. Verfahren gemäß einem der vorgenannten Ansprüche, **dadurch gekennzeichnet, dass** die Geschwindigkeit des sauerstoffhaltigen Gases (3) durch das Bett (2) 1,5 bis 15 m/h beträgt.

5. Verfahren gemäß einem der vorgenannten Ansprüche, **dadurch gekennzeichnet, dass** die Geschwindigkeit des verschmutzten Wassers (1) durch das Bett (2) 1,5 bis 15 m/h beträgt.

6. Verfahren gemäß einem der vorgenannten Ansprüche, **dadurch gekennzeichnet, dass** das Bett (2) sich in einem geschlossenen Tank (5) befindet, worin ein Überdruck zwischen 0,05 und 1 bar erzeugt wird.

7. Verfahren gemäß einem der vorgenannten Ansprüche, **dadurch gekennzeichnet, dass** ein Teil des gereinigten Abwassers (4) zurückgeführt wird und zu reinigendem Wasser zugesetzt wird, bevor es durch das Bett (2) geleitet wird.

8. Vorrichtung zum Reinigen von verschmutztem Wasser (1), die einen Tank (5) umfasst, worin ein Bett (2) aus Aktivkohlekörnern angebracht ist, woran aerobe Mikroorganismen haften, die organische Komponenten abbauen können, welcher Tank (5) über dem Bett (2) mit einer Zufuhrleitung (8) für verschmutztes Wasser (1) und unter dem Bett (2) mit einer Abfuhrleitung (10) für gereinigtes Abwasser (4) und Mitteln (13-14) zum Zuführen von sauerstoffhaltigem Gas (3) zu dem Bett (2) versehen ist, **dadurch gekennzeichnet, dass** der Tank (5) ein geschlossener Tank ist und dass die Mittel (13-14) zur Zufuhr von sauerstoffhaltigem Gas Mittel zum Einbringen besagten Gases unter Druck in den oberen Teil des Tanks (5) sind.

## Revendications

1. Procédé pour purifier de l'eau polluée, en particulier pour en retirer des matières organiques qui ne peuvent être aisément biodégradées, par lequel on guide de l'eau polluée (1) à travers un lit (2) auquel adhère une biomasse aérobie, l'écoulement de l'eau polluée s'effectue dans la direction du sommet vers la base, et un courant de gaz contenant de l'oxygène est guidé à travers le lit (2), **caractérisé en ce que** le lit (2) est un lit d'adsorption de charbon actif sur lequel la matière organique est adsorbée et **en ce que** l'eau polluée (1) est saturée avec de l'oxygène sur le lit à l'aide du courant de gaz contenant de l'oxygène.

2. Procédé selon la revendication 1, **caractérisé en ce que** l'eau polluée (1) et le gaz contenant de l'oxygène (3) sont guidés à travers le lit (2) dans la même direction d'écoulement.

3. Procédé selon la revendication 1, **caractérisé en ce que** la direction d'écoulement du gaz contenant de l'oxygène (3) s'étend de la base au sommet.

4. Procédé selon l'une quelconque des revendications précédentes, **caractérisé en ce que** la vitesse du gaz contenant de l'oxygène (3) à travers le lit (2) s'élève de 1,5 à 15 m/h.

5. Procédé selon l'une quelconque des revendications précédentes, **caractérisé en ce que** la vitesse de l'eau polluée (1) à travers le lit (2) s'élève de 1,5 à 15 m/h.

6. Procédé selon l'une quelconque des revendications précédentes, **caractérisé en ce que** le lit (2) est situé dans un réservoir fermé (5) dans lequel on génère une surpression entre 0,05 et 1 bar.

7. Procédé selon l'une quelconque des revendications précédentes, **caractérisé en ce qu'**une partie de l'effluent (4) est renvoyée et est ajoutée à l'eau à purifier avant son transport à travers le lit (2).

8. Dispositif pour purifier de l'eau polluée (1), qui contient un réservoir (5) dans lequel on prévoit un lit (2) de granulés de charbon actif auxquels adhèrent des micro-organismes aérobies qui sont en mesure de dégrader des composants organiques, ledit réservoir (5) étant muni d'un conduit d'alimentation (8) pour l'eau polluée (1) au-dessus du lit (2) et d'un conduit d'évacuation (10) pour l'effluent purifié (4) en dessous du lit (2), ainsi que de moyens (13 - 14) pour alimenter un gaz contenant de l'oxygène (3) au lit (2), **caractérisé en ce que** le réservoir (5) est un réservoir fermé et **en ce que** les moyens (13 - 14) pour alimenter un gaz contenant de l'oxygène sont des moyens qui permettent audit gaz de pénétrer sous pression dans la partie supérieure du réservoir (5).
